# EUROPEAN PATENT APPLICATION

(11) **EP 4 464 804 A1**
(43) Date of publication of application: **20.11.2024**
(21) Application number: 24171577.0
(22) Date of filing: 22.04.2024
(51) Int. Cl.: C22B 1/00, C22B 3/12, C22B 3/22, C22B 7/00, H01M 6/52, H01M 10/54, C22B 15/00, C22B 21/00

(54) **METHOD OF RECOVERING ELECTRODE MATERIAL AND METHOD OF MANUFACTURING RECYCLED ELECTRICITY STORAGE DEVICE**

(30) Priority: 15.05.2023 JP 2023080351
(71) Applicant: Prime Planet Energy & Solutions, Inc., Chuo-ku Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

A method of recovering electrode materials includes: a preparing step of preparing an electrode assembly or an electrode sheet, the electrode assembly and the electrode sheet including a current collector and an electrode active material layer formed on the current collector and containing an electrode active material; a dissolving step of immersing the electrode assembly or the electrode sheet in an etchant solution that dissolves the current collector; and a separating step of separating a precipitate containing the electrode active material from the etchant solution in which the current collector is dissolved.

## Description

### BACKGROUND

The present invention relates to a method of recovering electrode materials and a method of manufacturing recycled electricity storage devices.

JP 6334450 B discloses a method of recovering metal from lithium-ion battery recycled materials.

The publication discloses subjecting powdery or particulate lithium-ion battery scraps obtained through steps such as roasting, crushing, and sieving, as necessary, to acid leaching using a hydrogen peroxide solution, and causing lithium, nickel, cobalt, manganese, iron, copper, aluminum, and the like that may be contained therein to dissolve into a solution, to obtain a post-leaching solution, and subsequently subjecting the post-leaching solution to a solvent extraction technique, to separate the metallic elements sequentially. The publication discloses that valuable metals can be recovered by first recovering iron and aluminum, subsequently recovering manganese and copper, then cobalt, thereafter nickel, and finally leaving lithium in an aqueous phase.

According to the publication, as for the manganese that is acid leached and contained in the post-leaching solution, the manganese contained in the lithium-ion battery recycled materials are leached first when subjecting lithium-ion battery recycled materials to acid leaching using an acidic solution, and the manganese ions that are thereby caused to present in the acidic solution accelerate leaching of targeted metals contained in the lithium-ion battery recycled materials. Thereafter, as the targeted metals leach out, the manganese temporarily dissolved into the acidic solution precipitates and is taken into the residue. It is proposed that, by utilizing this, manganese is precipitated in the leaching step and separated, to thereby simplify or eliminate the recovery of manganese in the subsequent recovering step.

### SUMMARY

In electricity storage devices such as lithium-ion secondary batteries, rare metals are contained in large amounts in the electrode materials inside the electrode assemblies. The process of separating and recovering electrode materials from the electrode assemblies, such as the process described in the above-mentioned publication, is complicated and troublesome, and the technology for efficiently recovering electrode materials from electrode assemblies has not yet been established. For achieving a circular economy-oriented society, it is necessary to establish an efficient recycling technology for electrode materials that are used for electricity storage devices.

According to the present disclosure, a method of recovering an electrode material includes: a step of preparing an electrode assembly or an electrode sheet, including a current collector and an electrode active material layer, formed on the current collector and containing an electrode active material; a step of dissolving the electrode assembly or the electrode sheet into an etchant solution that dissolves the current collector; and a step of separating a precipitate containing the electrode active material from the etchant solution in which the current collector is dissolved.

Such a method of recovering electrode material is able to improve the recovery rate of electrode material in comparison with the cases where the entire batteries are scrapped and immersed into an etchant solution.

### BRIEF DESCRIPTION OF THE DRAWINGS

Fig. 1 is a perspective view illustrating a lithium-ion secondary battery 10.
Fig. 2 is a schematic vertical cross-sectional view taken along line II-II in Fig. 1.
Fig. 3 is a schematic view of an electrode assembly 20.
Fig. 4 is a flowchart illustrating a method of recovering electrode materials.
Fig. 5 is a flowchart illustrating a step in which the electrode assembly 20 is removed from the lithium-ion secondary battery 10.

### DETAILED DESCRIPTION

Hereinbelow, the present disclosure will be described in detail. Unless otherwise stated, the present disclosure is not intended to limit the invention as set forth in the appended claims. The drawings are depicted schematically and do not necessarily accurately depict actual objects. The features and components that exhibit the same effects are designated by the same reference symbols as appropriate, and the description thereof will not be repeated. Unless specifically stated otherwise, the recitation of numerical ranges in the present description, such as "X to Y", is meant to include any values between the upper limits and the lower limits, inclusive, that is, "greater than or equal to X to less than or equal to Y".

The disclosure herein relates to a method of recovering electrode materials from electrode assemblies. In the method of recovering electrode materials disclosed herein, electrode materials are recovered from, for example, the electrode assemblies that are removed from used lithium-ion secondary batteries. In such electrode assemblies, the positive electrode current collector may be composed of aluminum or aluminum alloy and the negative electrode current collector may be composed of copper or copper alloy.

It should be noted that the electrode assemblies to which the method of recovering electrode materials is applied are not limited to those that are removed from used lithium-ion secondary batteries. For example, it is also possible that the method may be applied to the electrode assemblies obtained from secondary batteries, such as lithium-ion secondary batteries, and those obtained from electricity storage devices including capacitors, such as lithium-ion capacitors and electric double layer capacitors. The electrode assemblies are not limited to those that are removed from used electricity storage devices, but may be those that are discarded as defective products during production of the electricity storage devices. Herein, embodiments of the method of recovering electrode materials are described taking the electrode assemblies removed from used lithium-ion secondary batteries as an example.

### Lithium-ion Secondary Battery 10

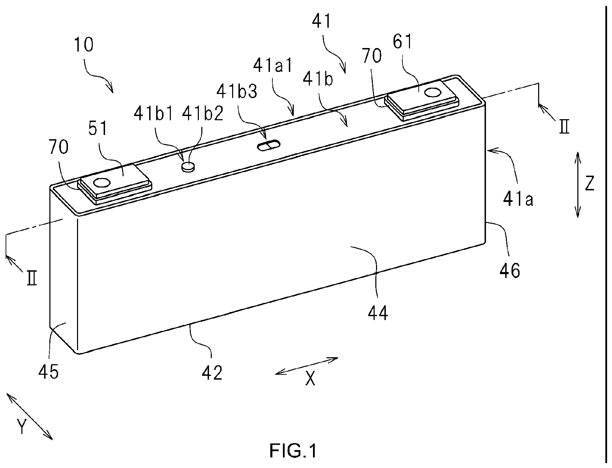

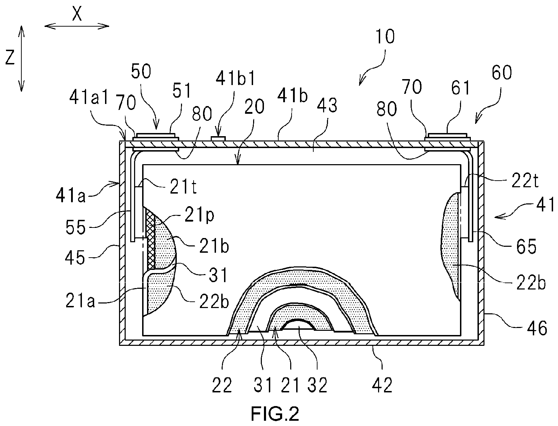

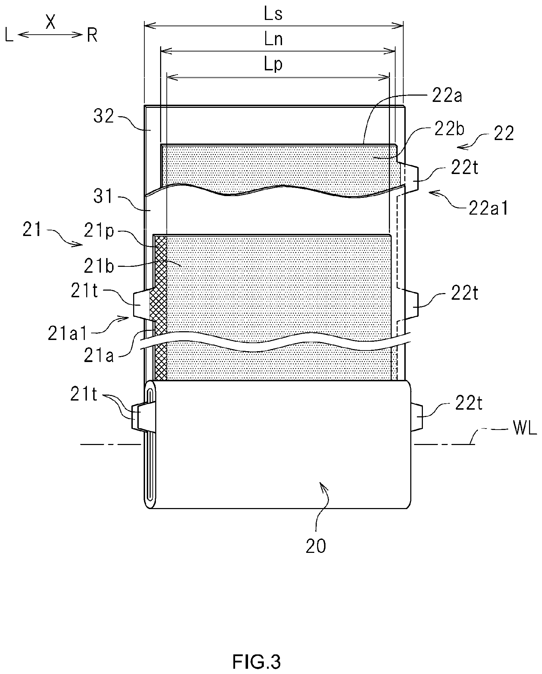

Fig. 1 is a perspective view illustrating a lithium-ion secondary battery 10. Fig. 2 is a schematic vertical cross-sectional view taken along line II-II in Fig. 1. Fig. 3 is a schematic view of an electrode assembly 20. Fig. 2 depicts the interior of the lithium-ion secondary battery 10 that is exposed along one wider surface of a battery case 41 in substantially a rectangular parallelepiped shape. Fig. 2 also illustrates the electrode assembly 20 in a partial cross-sectional view in which it is partially cut out. The lithium-ion secondary battery 10 shown in Fig. 2 is what is called a sealed battery in which the battery case 41 accommodating an electrode assembly 20 is sealed. In this embodiment, the battery case 41 is composed of a prismatic case made of metal in a substantially rectangular parallelepiped shape. In the drawings, the reference character X indicates a longer side axis of the battery case 41. The reference character Y indicates a shorter side axis that is orthogonal to the longer side axis. The reference character Z indicates a heightwise axis that is orthogonal to the shorter side axis and the longer side axis. The configuration of the battery case 41 is not limited to such embodiments. For example, the battery case 41 may be a cylindrical case, or may be what is called a pouch-shaped laminate case that covers the electrode assembly 20.

As illustrated in Fig. 1, the lithium-ion secondary battery 10 includes an electrode assembly 20 and a battery case 41. The battery case 41 includes a case main body 41a that includes an open end 41a1, and a sealing plate 41b that closes the open end 41a1 of the case main body 41a. The case main body 41a encloses the electrode assembly 20. Internal terminals 55, 65 and external terminals 51, 61 are attached to the sealing plate 41b, with a gasket 70 and an insulator 80 interposed between them. In this embodiment, the internal terminal 55 is connected to a positive electrode current collector foil 21a of the electrode assembly 20. The external terminal 51 is connected to the internal terminal 55, constituting a positive electrode terminal 50 outside the battery case 41. The internal terminal 65 is connected to a negative electrode current collector foil 22a of the electrode assembly 20. The external terminal 61 is connected to the internal terminal 65, constituting a negative electrode terminal 60 outside the battery case 41.

### Electrode Assembly 20

In the electrode assembly 20, a positive electrode element 21 and a negative electrode element 22 face each other across a separator. The positive electrode element 21 includes a positive electrode current collector 21a and a positive electrode active material layer 21b, which is formed on the positive electrode current collector 21a and includes a positive electrode active material. The negative electrode element 22 includes a negative electrode current collector 22a and a negative electrode active material layer 22b, which is formed on the negative electrode current collector 22a and includes a negative electrode active material. Each of the positive electrode element and the negative electrode element may be in a sheet shape. In that case, the positive electrode element may be a sheet-shaped member in which the positive electrode active material layer 21b is formed on both sides of the positive electrode current collector 21a, which is made of a metal foil having a predetermined width and thickness. The negative electrode element may be a sheet-shaped member in which the negative electrode active material layer 22b is formed on both sides of the negative electrode current collector 22a, which is made of a metal foil having a predetermined width and thickness. The sheet-shaped positive electrode element 21 is referred to as a positive electrode sheet. The sheet-shaped negative electrode element 22 is referred to as a negative electrode sheet.

For example, the electrode assembly 20 may be what is called a wound electrode assembly. The electrode assembly 20 includes a positive electrode sheet 21 serving as the positive electrode element, a negative electrode sheet 22 serving as the negative electrode element, and separator sheets 31 and 32 serving as separators. The positive electrode sheet 21, the first separator sheet 31, the negative electrode sheet 22, and the second separator sheet 32 are each a long strip-shaped member, and they are stacked with their longitudinal axes and lateral axes aligned in uniform orientations and wound together. The electrode assembly 20 is covered with an insulating film (not shown) and is enclosed in the battery case 41.

### Positive Electrode Sheet 21

The positive electrode sheet 21 includes a positive electrode current collector foil 21a having a predetermined width and a predetermined thickness, a positive electrode active material layer 21b containing a positive electrode active material, and an uncoated portion 21a1 defined along one lateral edge of the positive electrode current collector foil 21a with a constant width. The positive electrode active material layer 21b is formed on both faces of the positive electrode current collector foil 21a, except for the uncoated portion 21a1. The uncoated portion 21a1 is provided with a plurality of positive electrode tabs 21t disposed intermittently at predetermined positions along the longitudinal axis of the positive electrode sheet 21. Each of the plurality of positive electrode tabs 21t protrudes in a widthwise direction of the positive electrode sheet 21. In this embodiment, the positions at which the plurality of positive electrode tabs 21t are to be disposed are determined so that the positions of the plurality of positive electrode tabs 21t are aligned when the positive electrode sheet 21 is in a wound state.

The positive electrode current collector 21a uses a material that has required resistance properties such as electrolyte resistance and oxidation resistance, taking the operating potential at the positive electrode into consideration. For example, in lithium-ion secondary batteries, aluminum or an aluminum alloy made primarily of aluminum, for example, is commonly used for the positive electrode current collector 21a. In the sheet-shaped positive electrode element 21, aluminum or an aluminum foil made primarily of aluminum may be used for the positive electrode current collector 21a. For the positive electrode active material contained in the positive electrode active material layer 21b, it is possible to use a material that is capable of releasing charge carriers during charge and absorbing charge carriers during discharge.

In lithium-ion secondary batteries, for example, the positive electrode active material is a material that is capable of releasing lithium ions during charge and absorbing lithium ions during discharge. The positive electrode active material may be, for example, lithium-transition metal composite material. Other than the lithium-transition metal composite material, various materials have been proposed for use as the positive electrode active material, and unless specifically stated otherwise, the positive electrode active material is not limited to the lithium-transition metal composite material. The positive electrode active material layer 21b may be, for example, one in which a mixture material containing the positive electrode active material as described above, a conductive agent, a binder, and the like that are mixed in a solvent, is coated and then dried. In addition, in this embodiment, a positive electrode protective layer 21p is provided on the positive electrode current collector foil 21a (uncoated portion 21a1) at the edge of the positive electrode active material layer 21b. The positive electrode protective layer 21p is a layer that protects the uncoated portion 21a1 and may be a layer containing an inorganic filler (for example, alumina).

### Negative Electrode Sheet 22

The negative electrode sheet 22 includes a negative electrode current collector foil 22a having a predetermined width and a predetermined thickness, a negative electrode active material layer 22b containing a negative electrode active material, and an uncoated portion 22a1 defined along one lateral edge of the negative electrode current collector foil 22a with a constant width. The negative electrode active material layer 22b is formed on both faces of the negative electrode current collector foil 22a, except for the uncoated portion 22a1. In this embodiment, the uncoated portion 22a1 is provided with a plurality of negative electrode tabs 22t disposed intermittently at predetermined positions along the longitudinal axis of the negative electrode sheet 22. Each of the plurality of negative electrode tabs 22t protrudes in a widthwise direction of the negative electrode sheet 22. In this embodiment, the positions at which the plurality of negative electrode tabs 22t are to be disposed are determined so that the positions of the plurality of negative electrode tabs 22t are aligned when the negative electrode sheet 22 is in a wound state.

The negative electrode current collector 22a uses a material that has required resistance properties such as electrolyte resistance and oxidation resistance, taking the operating potential at the negative electrode into consideration. For example, in lithium-ion secondary batteries, copper or an copper alloy made primarily of copper, for example, is commonly used for the negative electrode current collector 22a. In the sheet-shaped negative electrode element 22, copper or a copper foil made primarily of copper may be used for the negative electrode current collector 22a. For the negative electrode active material contained in the negative electrode active material layer 22b, it is possible to use a material that is capable of absorbing charge carriers during charge and releasing charge carriers during discharge. For example, in lithium-ion secondary batteries, the negative electrode active material is a material that is capable of absorbing lithium ions during charge and releasing the absorbed lithium ions during discharge, such as natural graphite. Other than natural graphite, various materials have generally been proposed for use as the negative electrode active material, and the negative electrode active material is not limited to any particular material. The negative electrode active material layer 22b may be, for example, one in which a mixture material containing the negative electrode active material as described above, a conductive agent, a binder, and the like that are mixed in a solvent, is coated and then dried.

Each of the separator sheets 31 and 32 may be formed of, for example, an electrolyte permeable porous resin sheet that has required heat resistance. Various proposals have been made about the separator sheets 31 and 32, and there is no particular restriction on the separator sheets 31 and 32. The separators 31 and 32 may include a function layer, such as an adhesive layer or a heat resistant layer (HRL), disposed on a surface of a substrate composed of porous resin sheet. The heat resistant layer is a layer containing, for example, an inorganic filler such as alumina, silica, boehmite, magnesia, or titania, and a binder such as PVdF. The heat resistant layer may also serve as an adhesive layer.

Herein, as illustrated in Fig. 2, width Ln of the negative electrode active material layer 22b is formed wider than, for example, width Lp of the positive electrode active material layer 21b. Width Ls of the separator sheets 31 and 32 is wider than that of the negative electrode active material layer 22b. In other words, Lp < Ln < Ls, as shown in Fig. 2. The positive electrode sheet 21, the first separator sheet 31, the negative electrode sheet 22, and the second separator sheet 32 are aligned longitudinally, stacked one on another, and wound together. Here, the negative electrode active material layer 22b covers the positive electrode active material layer 21b with the separator sheets 31 and 32 interposed therebetween. The negative electrode active material layer 22b is covered with the separator sheets 31 and 32. The positive electrode tabs 21t of the positive electrode current collector foil 21a and the negative electrode tabs 22t of the negative electrode current collector foil 22a are provided so as to protrude widthwise in opposite directions to each other from the separator sheets 31 and 32. The positive electrode protective layer 21p is opposed at the side edge of the negative electrode sheet 22 that is opposite to the side at which the negative electrode tabs 22t are provided, with the separator sheets 31 and 32 interposed.

As illustrated in Fig. 2, the electrode assembly 20 is formed in a flattened shape along one plane containing the winding axis WL so that it can be enclosed in the case main body 41a of the battery case 41. Along the winding axis WL of the electrode assembly 20, the positive electrode tabs 21t are disposed at one end, and the negative electrode tabs 22t are disposed at the opposite end. Herein, as an example of the electrode assembly 20, a wound electrode assembly is illustrated in which the positive electrode sheet 21, the first separator sheet 31, the negative electrode sheet 22, and the second separator sheet 32 are stacked and wound together. The configuration of the electrode assembly 20 is not limited to such a wound electrode assembly. Although not shown in the drawings, the electrode assembly 20 may be, for example, what is called a stacked electrode assembly, in which a plurality of positive electrode sheets and a plurality of negative electrode sheets in a predetermined shape are stacked together with separator sheets interposed therebetween.

### Battery Case 41

The battery case 41 encloses the electrode assembly 20. In this embodiment, the battery case 41 includes a case main body 41a and a sealing plate 41b. The case main body 41a is a closed-bottom member having an open end 41a1 disposed opposite its bottom surface. In this embodiment, the case main body 41a is in a substantially rectangular parallelepiped shape one side surface of which is open. The sealing plate 41b is a plate-shaped member attached to the open end 41a1 of the case main body 41a. In this embodiment, the case main body 41a and the sealing plate 41b are formed of aluminum or an aluminum alloy composed mainly of aluminum, from the viewpoints of reducing weight and providing sufficient rigidity. Although the embodiment shown in Fig. 1 illustrates a wound type electrode assembly 20 as an example, the structure of the electrode assembly 20 is not limited to such an embodiment. For example, it is possible that the structure of the electrode assembly 20 may be a stacked structure in which positive electrode sheets and negative electrode sheets are alternately stacked on each other with separators interposed therebetween. It is also possible that a plurality of electrode assemblies 20 may be housed in the battery case 41.

The battery case 41 may enclose an electrolyte solution, which is not shown. The electrolyte solution may be a non-aqueous electrolyte solution in which a supporting salt is dissolved in a non-aqueous solvent. Examples of the non-aqueous solvent include carbonate-based solvents, such as ethylene carbonate, dimethyl carbonate, and ethyl methyl carbonate. Examples of the supporting salt include fluorine-containing lithium salts, such as LiPF₆.

### Case Main Body 41a

The case main body 41a has a substantially rectangular parallelepiped shape one side surface of which is open. The case main body 41a includes a substantially rectangular bottom surface portion 42, a pair of wider side surface portions 43 and 44 (see Fig. 2), and a pair of narrower side surface portions 45 and 46. The pair of wider side surface portions 43 and 44 extend upward from respective longer sides of the bottom surface portion 42. The pair of narrower side surface portions 45 and 46 extend upward from respective shorter sides of the bottom surface portion 42. An open end 41a1, which is surrounded by the pair of wider side surface portions 43 and 44 and the pair of narrower side surface portions 45 and 46, is formed in one end face of the case main body 41a.

### Sealing Plate 41b

The sealing plate 41b closes the open end 41a1 of the case main body 41a. In this embodiment, the sealing plate 41b is in a rectangular shape when viewed in plan, as illustrated in Fig. 2. In this embodiment, the sealing plate 41b is provided with a filling port 41b1 and a safety vent 41b3. After the sealing plate 41b is attached to the open end 41a1 of the case main body 41a and an electrolyte solution is filled into the case main body 41a, the filling port 41b1 is closed by a sealing member 41b2 attached thereto. Note that Fig. 2 shows a state in which the sealing plate 41b has been attached and welded to the open end 41a1 of the case main body 41a. In Fig. 2, the sealing member is not attached to the sealing plate 41b. The safety vent 41b3 is a thinned portion that raptures when the internal pressure of the battery case 41 becomes higher than a predetermined pressure.

A positive electrode terminal 50 and a negative electrode terminal 60 are attached to the sealing plate 41b. The positive electrode terminal 50 includes an external terminal 51 and an internal terminal 55. The negative electrode terminal 60 includes an external terminal 61 and an internal terminal 65. Each of the internal terminals 55 and 65 is fitted to the inside of the sealing plate 41b with an insulator 80 interposed. Each of the external terminals 51 and 61 is fitted to the outside of sealing plate 41b with a gasket 70 interposed. Each of the internal terminals 55 and 65 extends inward of the case main body 41a. The uncoated portion 21a1 of the positive electrode current collector foil 21a and the uncoated portion 22a1 of the negative electrode current collector foil 22a of the electrode assembly 20 are attached to the respective internal terminals 55 and 65, which are respectively attached to opposite longitudinal side-edge portions of the sealing plate 41b.

The internal terminals 55 and 65 are made of a metal. The internal terminal 55 of the positive electrode may be made of, for example, aluminum or an aluminum alloy, from the viewpoint of improving the joining strength with the positive electrode tabs 21t. The internal terminal 65 of the negative electrode may be made of, for example, copper or a copper alloy, from the viewpoints of improving the joining strength with the negative electrode tabs 22t and providing required resistance properties such as electrolyte resistance and oxidation resistance.

The external terminals 51 and 61 are made of a metal. The metal usable as the external terminals 51 and 61 may be selected as appropriate depending on, for example, the type of the external component connected thereto, such as bus bar. The external terminals 51 and 61 may be made of, for example, aluminum, an aluminum alloy, copper, a copper alloy, or the like. The external terminals 51 and 61 may be constructed of, for example, a plurality of types of metals joined together by a dissimilar metal joint. Although not shown in the drawings, the sealing plate 41b is formed with mounting holes. An insulator 80 is attached to each of the mounting holes inside the sealing plate 41b, and a gasket 70 is attached to each of the mounting holes outside the sealing plate 41b. Either one of the terminals of the internal terminals 55, 65 and the external terminals 51, 61 is provided with a shaft portion, which is inserted through each of the mounting holes via the gasket 70 and the insulator 80. The internal terminals 55, 65 and the external terminals 51, 61 are joined by the respective shaft portions inserted through the mounting holes.

The gasket 70 and the insulator 80 may be made of a material that is excellent in chemical resistance and weather resistance. In this embodiment, the gasket 70 is made of tetrafluoroethylene-perfluoroalkyl vinyl ether copolymer (PFA). It should be noted that the material that may be used for the gasket 70 is not limited to PFA. The gasket 70 may be made of, for example, polypropylene (PP), polyethylene (PE), polyphenylene sulfide (PPS), or the like. The insulator 80 is made of polyphenylene sulfide (PPS). It should be noted that the material that may be used for the insulator 80 is not limited to PPS.

In manufacturing the lithium-ion secondary battery 10, with the gasket 70 and the insulator 80 being attached to the sealing plate 41b, the positive electrode terminal 50 and the negative electrode terminal 60 are attached to the sealing plate 41b. Subsequently, the positive electrode tabs 21t are joined to the internal terminal 55 of the positive electrode terminal 50, and the negative electrode tabs 22t are joined to the internal terminal 65 of the negative electrode terminal 60, whereby the electrode assembly 20 is attached to the sealing plate 41b. Subsequently, while the electrode assembly 20 is inserted into the case main body 41a from the open end 41a1, the sealing plate 41b is fitted to the open end 41a1 (see Fig. 1) of the case main body 41a. At this time, the winding axis WL (see Fig. 3) is disposed along the longer side axis X of the case main body 41a. The positive electrode tabs 21t of the electrode assembly 20 are disposed facing a narrower surface portion 45. The negative electrode tabs 22t are disposed facing a narrower surface portion 46. Then, as illustrated in Fig. 2, the peripheral edge portion of the sealing plate 41b is joined to the edge of the open end 41a1 of the case main body 41a. The joining may be achieved by, for example, continuous welding without providing gaps. Such welding may be carried out by, for example, laser welding.

The electrode assembly 20 is not limited to such a wound electrode assembly. As mentioned previously, the electrode assembly 20 may be a stacked electrode assembly. It is also possible that a plurality of electrode assemblies 20 may be housed in the battery case 41. Various kinds of structures may be employed for the internal terminals 55, 65, the external terminals 51, 61, the gasket 70, and the insulator 80. For example, appropriate structures may be employed for the internal terminals 55, 65, the external terminals 51, 61, the gasket 70, and the insulator 80, according to the structure of the electrode assembly 20 enclosed in the battery case 41. In addition, one of the positive electrode terminal 50 and the negative electrode terminal 60 may be provided with a mechanism that interrupts electric current as the internal pressure builds up due to the gas generated inside at the event of overcharge [i.e., current interrupt device (CID)].

The lithium-ion secondary battery 10 such as described above includes a battery case, terminals, an electrode assembly, and an electrolyte solution. Such a lithium-ion secondary battery 10 contains a variety of metals, such as lithium, cobalt, manganese, nickel, cobalt, and aluminum. With the advancement of electrification of vehicles, it is expected that electricity storage devices, such as the lithium-ion secondary battery 10, will be discarded in larger amounts. Metals, such as those mentioned above, are contained in large amounts in the electrode assembly of the lithium-ion secondary battery 10. In particular, the electrode materials contained in the electrode assembly contain rare metals, such as lithium and cobalt. As described above, the electrode materials are supported (bonded) by a binder to the current collector (metal foil) in a state of mixture material, in which they are mixed with conductive agent, binder, and the like.

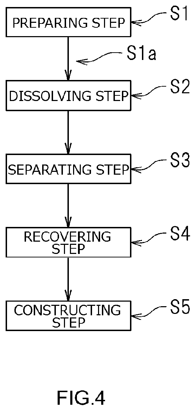

Fig. 4 is a flowchart illustrating a method of recovering electrode materials. In an embodiment of the present disclosure, a method of recovering electrode materials includes a preparing step S1, a dissolving step S2, and a separating step S3. A method of manufacturing a recycled electricity storage device includes a recovering step S4 and a constructing step S5.

### Preparing Step S1

The preparing step S1 involves, for example, preparing an electrode assembly 20. The electrode assembly 20 prepared in the preparing step S1 includes a positive electrode current collector 21a, a positive electrode active material layer 21b formed on the positive electrode current collector 21a, a negative electrode current collector 22a, and a negative electrode active material layer 22b formed on the negative electrode current collector 22a. Herein, the positive electrode current collector 21a may be made of aluminum or aluminum alloy, and the negative electrode current collector 22a may be made of copper or copper alloy. It is also possible that the preparing step S1 may involve preparing an electrode sheet. The electrode sheet may be a positive electrode sheet 21 including a positive electrode current collector 21a and a positive electrode active material layer 21b formed on the positive electrode current collector 21a. The electrode sheet may be a negative electrode sheet 22 including a negative electrode current collector 22a and a negative electrode active material layer 22b formed on the negative electrode current collector 22a. Herein, the positive electrode active material layer 21b contains positive electrode active material particles. The negative electrode active material layer 22b contains negative electrode active material particles.

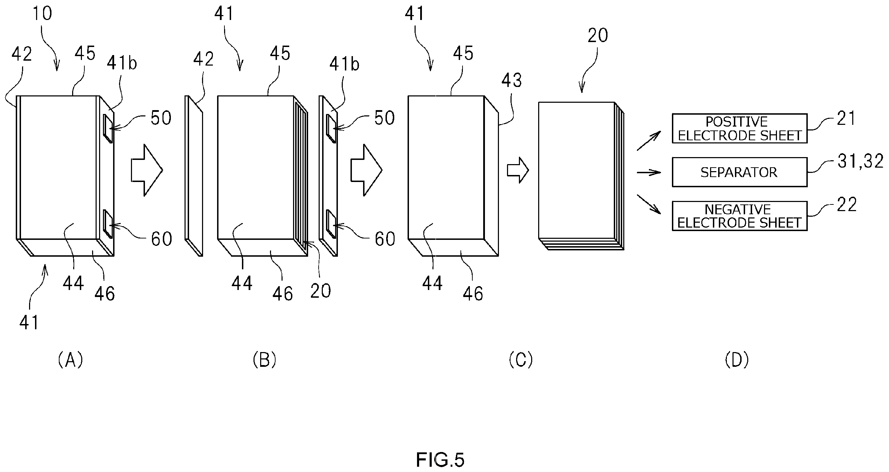

The preparing step S1 may include removing an electrode assembly 20 from an electricity storage device 10 including a battery case 41 accommodating the electrode assembly 20. Fig. 5 is a flowchart illustrating a step in which the electrode assembly 20 is removed from the lithium-ion secondary battery 10. Fig. 5(A) shows the lithium-ion secondary battery 10 as an electricity storage device. The lithium-ion secondary battery 10 may be, for example, a used lithium-ion secondary battery 10, which may be recovered from an electric vehicle. Figs. 5(A) and 5(B) show the step of removing the electrode assembly 20 from the lithium-ion secondary battery 10. As illustrated in Fig. 5, the electrode assembly 20 may be cut off from the sealing plate 41b by cutting the battery case 41. In the step of removing the electrode assembly 20 from the lithium-ion secondary battery 10, the battery case 41 may be cut and the electrode assembly 20 may be removed. Cutting of the battery case 41 may be carried out by, for example, a water jet cutting process. Water jet cutting is able to smoothly cut the battery case 41 or terminal components, which are made of thin aluminum or copper. In addition, water jet cutting is unlikely to produce cutting debris, and moreover, it is possible to collect cutting debris together with water even when it is produced. By water jet cutting, even if the lithium-ion secondary battery 10 starts fire in the cutting process, the fire can be extinguished quickly by immersing the battery case 41 into a water tank, so that the battery case 41 can be cut safely.

In Fig. 5(B), the top surface portion joined to the sealing plate 41b and the bottom surface portion 42 may be cut off from the battery case 41 of the lithium-ion secondary battery 10. At this time, the terminal components connecting the sealing plate 41b and the electrode assembly 20 (i.e., the internal terminals 55 and 65 in the embodiment shown in Fig. 2) may be cut to disconnect the electrode assembly 20 from the battery case 41. For example, the cutting of the top surface portion and the bottom surface portion 42 of the battery case 41 may be achieved by a water jet cutting process, as described above. When the top surface portion and the bottom surface portion 42 are disconnected from the battery case 41, the electrode assembly 20 is obtained in such a state in which it is enclosed in tubular-shaped side circumferential surfaces of the battery case 41, which include a pair of wider surface portions 43 and 44 and a pair of narrower surface portions 45 and 46, as illustrated in Fig. 5(B). Thereafter, as illustrated in Fig. 5(C), the electrode assembly 20 may be pushed out from the tubular-shaped side circumferential surfaces of the battery case 41. According to this method, the electrode assembly 20 is not broken apart but is removed in a unitary state in which the positive electrode sheet 21, the first separator sheet 31, the negative electrode sheet 22, and the second separator sheet 32 are put together. Thus, the electrode assembly 20 may be prepared in a unitary state in which the positive electrode sheet 21, the first separator sheet 31, the negative electrode sheet 22, and the second separator sheet 32 are put together.

As described above, the electrode assembly 20 can be removed smoothly by cutting the top surface portion and the bottom surface portion of the battery case 41, cutting the terminals connecting the electrode assembly 20 and the battery case 41 together, and pushing the electrode assembly 20 out of the tubular-shaped side circumferential surfaces. Although the embodiment shown in Fig. 5 illustrates that the battery case 41 is a prismatic case, the electrode assembly 20 can be removed as well by cutting the case and the terminals also in the case where the battery case 41 is a cylindrical case. In the case where the battery case 41 uses a pouch-shaped laminate film as well, the electrode assembly 20 can be removed likewise by cutting the laminate film and the terminals. In this embodiment, the electrode assembly 20 is a wound electrode assembly, and the strip-shaped electrode sheets are obtained in a state in which they are wound together with separators.

Fig. 5(D) illustrates the step in which the electrode sheets 21 and 22 are separated from the electrode assembly 20. In the preparing step S1, electrode sheets may be prepared as needed. When electrode sheets are prepared in the preparing step S1, the electrode assembly 20 may be separated into the positive electrode sheet 21, the negative electrode sheet 22, and the separators 31 and 32, to thereby prepare the positive electrode sheet 21 and the negative electrode sheet 22, as illustrated in Fig. 5(D). When the electrode assembly 20 is a wound electrode assembly, the electrode assembly may be unwound to thereby separate the positive electrode sheet 21 and the negative electrode sheet 22. When the electrode assembly 20 is separated into the positive electrode sheet 21 and the negative electrode sheet 22 as well, the electrode materials to be recovered are contained in the electrode active material layers, and they can be handled in a unitary state with the current collectors. This provides good handleability. Moreover, because the separators 31 and 32 are separated from each other, processing after the dissolving step is made easier.

The electrode assembly 20 may also be a stacked electrode assembly. When the electrode assembly 20 is a stacked electrode assembly, positive electrode current collectors 21a of a plurality of positive electrode sheets 21 are put together and joined to the positive electrode terminal 50. Also, negative electrode current collectors 22a of a plurality of negative electrode sheets 22 are put together and joined to the positive electrode terminal 60. As a result, with a stacked electrode assembly, the sheet group of the positive electrode sheets 21 joined to the positive electrode terminal 50 and the sheet group of the negative electrode sheets 22 joined to the negative electrode terminal 60 can be separated in a unitary state.

As described above, in the preparing step S1, an electrode assembly or electrode sheet that contains the electrode active material layer formed on the current collector may be prepared.

### Crushing Step S1a

It is also possible that a crushing step of crushing the electrode assembly 20 or the electrode sheets 21 and 22 may be provided after the preparing step S 1 and before the dissolving step S2. When this is the case, the electrode assembly 20 or the electrode sheets 21 and 22 may be cut to a required size by water jet cutting. It is expected that crushing the electrode assembly 20 or the electrode sheets 21 and 22 allows the etchant solution to spread through the electrode assembly 20 or the electrode sheets 21 and 22 easily and to speed up the processing in the dissolving step.

### Dissolving Step S2

The dissolving step S2 involves immersing the electrode assembly 20 or the electrode sheets 21 and 22, prepared in the preparing step S 1, in an etchant solution that dissolves a current collector. The etchant solution used herein may be a solution that is capable of dissolving the current collector in the electrode assembly or the electrode sheets. To the present inventor's knowledge, when the positive electrode current collector is formed of aluminum or an aluminum alloy and the negative electrode current collector is formed of copper or a copper alloy, examples of the etchant solution that can be used may include lithium hydroxide (LiOH), sodium hydroxide (NaOH), ferric chloride solution (FeCL₃), phosphoric acid, hydrochloric acid, hydrobromic acid, hydrofluoric acid, nitric acid, hydriodic acid, and ammonia water. In order to accelerate the above-described reactions, it is also possible to mix acids with each other, mix alkalis with each other, and add a hydrogen peroxide solution as an oxidization accelerator. To the present inventor's knowledge, aqueous lithium hydroxide solution , aqueous sodium hydroxide solution, and ferric chloride solution are preferable from the viewpoints of functionality, availability, and being relatively safe in handling. Among them, aqueous sodium hydroxide solution does not easily dissolve some of the metals in the positive electrode active material particles and is therefore capable of keeping the quality of the recovered positive electrode active material particles high. To the present inventor's knowledge, about 95% of the positive electrode active material particles can be recovered when aqueous lithium hydroxide solution or aqueous sodium hydroxide solution is used. Thus, for the etchant solution, it is possible to use at least one solution among lithium hydroxide (LiOH), sodium hydroxide (NaOH), ferric chloride solution (FeCL₃), phosphoric acid, hydrochloric acid, hydrobromic acid, hydrofluoric acid, nitric acid, hydriodic acid, and ammonia water, and mixture solutions thereof. In addition, the etchant solution may also contain a required addition agent.

Aqueous lithium hydroxide solution, aqueous sodium hydroxide solution, and ferric chloride solution dissolve aluminum and copper effectively. For this reason, they are able to dissolve the positive electrode current collector 21a, which is composed of aluminum or an aluminum alloy, and the negative electrode current collector 22a, which is composed of copper or a copper alloy. When the positive electrode current collector 21a and the negative electrode current collector 22a are dissolved, the positive electrode active material layer 21b and the negative electrode active material layer 22b cannot keep their forms. The positive electrode active material particles and the negative electrode active material particles remain. In the dissolving step S2, when the electrode assembly 20 is immersed in an etchant solution, the positive electrode active material particles, the negative electrode active material particles, and the separators 31 and 32 contained in the electrode assembly 20 remain undissolved in the etchant solution. In the dissolving step, the temperature of the etchant solution may be adjusted to an appropriate temperature in order to accelerate the reaction of the etchant solution. For example, when NaOH is used for the etchant solution, the temperature of the etchant solution may be adjusted to about 90°C. In addition, in the dissolving step, the rate of reaction is improved when the etchant solution is stirred as appropriate. The etchant solution may be used at an appropriate concentration so that the dissolving step can exhibit required performance. The temperature and concentration of the etchant solution may be set to an appropriate temperature and concentration by, for example, conducting testing in advance.

To the present inventors' knowledge, the positive electrode sheet 21 and the negative electrode sheet 22 may be separated in advance and immersed respectively in the etchant solutions. In this case, from the etchant solution in which the positive electrode sheet 21 has been immersed, positive electrode active material particles contained in the positive electrode sheet 21 are left remaining in the etchant solution. Also, from the etchant solution in which the negative electrode sheet 22 has been immersed, negative electrode active material particles are left remaining in the etchant solution. In this case, in the preparing step, the positive electrode sheet 21 and the negative electrode sheet 22 may be prepared respectively in a separated state. In the dissolving step S2, an etchant solution may be selected that is able to dissolve the positive electrode current collector 21a but is less likely to dissolve positive electrode active material particles, according to the positive electrode current collector 21a and the positive electrode active material particles of the positive electrode sheet 21. Likewise, an etchant solution may be selected that is able to dissolve the negative electrode current collector 22a but is less likely to dissolve negative electrode active material particles, according to the negative electrode current collector 22a and the negative electrode active material particles of the negative electrode sheet 22. Thus, when the positive electrode sheet 21 and the negative electrode sheet 22 are immersed respectively in etchant solutions in a separated state, it is possible to select appropriate etchant solutions respectively. Moreover, because the positive electrode active material particles and the negative electrode active material particles are separated respectively, the recovery rate of active material particles in subsequent steps is improved. For example, when the positive electrode sheet 21 and the negative electrode sheet 22 are separated from each other, the etchant solution for etching the positive electrode current collector 21a of the positive electrode sheet 21 may be lithium hydroxide or sodium hydroxide.

### Separating Step S3

The separating step S3 involves separating a precipitate containing the materials that constitute the active material layer from the etchant solution in which the current collector is dissolved. For example, when the electrode assembly 20 is dissolved in an etchant solution in the dissolving step S2, the positive electrode active material particles, the negative electrode active material particles, and the separators 31 and 32 contained in the electrode assembly 20 remain undissolved in the etchant solution. In the separating step S3, for example, a precipitate that contains positive electrode active material particles and negative electrode active material particles may be separated from the etchant solution that has been collected in the dissolving step S2.

The precipitate may be separated by, for example, filtering. When the positive electrode sheet 21 and the negative electrode sheet 22 are immersed respectively in etchant solutions in a separated state, an etchant solution in which the positive electrode active material particles remain undissolved and an etchant solution in which the negative electrode active material particles remain undissolved are obtained. In this case, in the separating step, a precipitate containing the positive electrode active material may be separated from the etchant solution in which the positive electrode active material particles remain undissolved. Also, a precipitate containing the negative electrode active material particles may be separated from the etchant solution in which the negative electrode active material particles remain undissolved.

### Recovering Step S4

The recovering step S4 involves recovering an electrode material containing at least one of the positive electrode active material and the negative electrode active material from the precipitate. For example, the separated precipitates are further dried and moreover the binder is baked off, whereby positive electrode active material particles and negative electrode active material particles are obtained. In some cases, the positive electrode active material particles and the negative electrode active material particles may form a mass of particles. By pulverizing the mass and classifying it according to size, specific gravity, and the like, it is possible to separate it into positive electrode active material particles and negative electrode active material particles. Note that when the particles are classified into a larger number of levels, the recovery rate improves accordingly. For drying of the precipitates, it is possible to use a vacuum dryer, for example. Drying conditions may be determined such conditions as to be able to cause the resin material used for the binder to melt and disappear. For example, drying may be carried out under the conditions at 180° for about 120 minutes while vacuuming. To the present inventors' knowledge, such a process can produce a dry powder with an average particle size of about 2.0 mm. By further pulverizing the resultant powder, a powder with a particle size of about less than or equal to 15 µm may be obtained.

When the electrode assembly 20 containing the positive electrode sheet 21 and the negative electrode sheet 22 is dissolved collectively, the powder after drying contains positive electrode active material particles (lithium-transition metal composite material) and negative electrode active material particles (graphite). Of these, the positive electrode active material particles (lithium-transition metal composite material) have a higher specific gravity than the negative electrode active material particles (graphite), so they can be separated by a classifier based on the difference in specific gravity.

In addition, when the positive electrode sheet 21 and the negative electrode sheet 22 are separated in advance and immersed in the etchant solutions respectively, the process of separating particles into positive electrode active material particles and negative electrode active material particles is made unnecessary or simple, so the recovery rate of positive electrode active material particles and negative electrode active material particles is improved. Furthermore, the aluminum dissolved in the etchant solution can be precipitated as, for example, aluminum hydroxide, regenerated, and reused for electrode terminal components and the like. For the precipitation of aluminum, the Bayer process, which has both high reliability and high economic efficiency, may be used as an alumina producing technique. The copper dissolved in the etchant solution can be reproduced by electrolysis and reused for electrode terminal components and the like.

The recovered positive electrode active material particles may have caused the Li therein to be dissolved out when dissolved into the etchant solution when the positive electrode sheet is dissolved in the etchant solution. For this reason, the recovered positive electrode active material particles may be mixed with a predetermined amount of LiO₃ or the like, stirred, and sintered. The sintering conditions may be set at 850°C for about 40 minutes, for example. As a result, the recovered positive electrode active material particles can be recycled as positive electrode active material particles.

### Constructing Step S5

The electrode materials that are recovered in the separating step, such as positive electrode active material particles and negative electrode active material particles, can be recycled and used as materials for constructing electricity storage devices. A method of manufacturing a recycled electricity storage device, disclosed herein, may include a constructing step of constructing an electricity storage device using electrode materials. It is expected that recycling of the electrode materials as described above makes effective use of resources and reduces material costs of electricity storage devices.

As described above, the method of recovering electrode materials, disclosed herein, includes a preparing step S1, a dissolving step S2, and a separating step S3. The preparing step S1 involves preparing an electrode assembly 20 or electrode sheets 21 and 22, containing current collectors 21a and 22a and electrode active material layers 21b and 22b formed on current collectors 21a and 22a. The dissolving step S2 involves immersing the electrode assembly 20 or the electrode sheets 21 and 22 into an etchant solution. The etchant solution may be a liquid that dissolves current collectors 21a and 22a. The etchant solution may be a liquid that dissolves current collectors 21a and 22a but does not dissolve electrode active materials contained in the electrode active material layers 21b and 22b in the electrode assembly 20 or the electrode sheets 21 and 22. In this case, in the dissolving step S2, the electrode assembly 20 or the electrode sheets 21 and 22 is/are immersed in the etchant solution, to dissolve the current collectors 21a and 22a, whereby electrode materials are left undissolved in the etchant solution. In this case, because the etchant solution merely need to dissolve the current collectors 21a and 22a, the etching process proceeds quickly and the recovery rate of electrode materials improves, in comparison to the case where the entire battery is scrapped and immersed in the etchant solution.

More preferably, the electrode assembly 20 is disassembled to the positive electrode sheet 21 and the negative electrode sheet 22 to separate the positive electrode sheet 21 and the negative electrode sheet 22 from each other. Next, the positive electrode sheet 21 and the negative electrode sheet 22 are crushed respectively. Here, the smaller the positive electrode sheet 21 and the negative electrode sheet 22 are crushed, the shorter the processing time for the dissolving step S2. Next, the crushed electrode sheets are immersed into the etchant solution to dissolve the current collectors. Then, the precipitate is collected (filtered), dried, pulverized, and classified. By processing the positive electrode sheet 21 and the negative electrode sheet 22 separately as described above, the recovery rate of the positive electrode active material particles and the negative electrode active material particles can be improved. To the present inventor's knowledge, it is possible to achieve a high recovery rate of electrode materials, higher than or equal to 95%, for example.

Various embodiments of the invention have been described hereinabove according to the present disclosure. Unless specifically stated otherwise, the embodiments described herein do not limit the scope of the present invention. It should be noted that various other modifications and alterations may be possible in the embodiments of the invention disclosed herein. In addition, the features, structures, or steps described herein may be omitted as appropriate, or may be combined in any suitable combinations, unless specifically stated otherwise.

As has been described above, the present description contains the disclosure as set forth in the following items.

### Item 1:

A method of recovering electrode materials, including:
a preparing step of preparing an electrode assembly or an electrode sheet, the electrode assembly and the electrode sheet each including a current collector and an electrode active material layer formed on the current collector and containing an electrode active material;
a dissolving step of immersing the electrode assembly or the electrode sheet in an etchant solution that dissolves the current collector; and
a separating step of separating a precipitate containing the electrode active material from the etchant solution in which the current collector is dissolved.

### Item 2:

The method of recovering electrode materials according to item 1, wherein:
the preparing step includes preparing the electrode sheet;
the electrode sheet is a positive electrode sheet including a positive electrode current collector and a positive electrode active material layer formed on the positive electrode current collector and containing a positive electrode active material;
the dissolving step uses an etchant solution that dissolves the positive electrode current collector; and
the separating step includes separating a precipitate containing the positive electrode active material from the etchant solution in which the positive electrode current collector is dissolved.

### Item 3:

The method of recovering electrode materials according to item 2, wherein the positive electrode current collector includes aluminum or an aluminum alloy.

### Item 4:

The method of recovering electrode materials according to item 1, wherein:
the preparing step includes preparing the electrode sheet;
the electrode sheet is a negative electrode sheet including a negative electrode current collector and a negative electrode active material layer formed on the negative electrode current collector and containing a negative electrode active material;
the dissolving step uses an etchant solution that dissolves the negative electrode current collector; and
the separating step includes separating a precipitate containing the negative electrode active material from the etchant solution in which the negative electrode current collector is dissolved.

### Item 5:

The method of recovering electrode materials according to item 4, wherein the negative electrode current collector includes copper or a copper alloy.

### Item 6:

The method of recovering electrode materials according to item 1, wherein:
the preparing step includes preparing an electrode assembly;
the electrode assembly includes:
   a positive electrode current collector;
   a positive electrode active material layer formed on the positive electrode current collector and containing a positive electrode active material;
   a negative electrode current collector; and
   a negative electrode active material layer formed on the negative electrode current collector and containing a negative electrode active material;
the dissolving step uses an etchant solution that dissolves the positive electrode current collector and negative electrode current collector of the electrode assembly; and
the separating step includes separating a precipitate containing the positive electrode active material and the negative electrode active material from the etchant solution in which the positive electrode current collector and the negative electrode current collector are dissolved.

### Item 7:

The method of recovering electrode materials according to item 6, wherein the positive electrode current collector includes aluminum or an aluminum alloy, and the negative electrode current collector includes copper or a copper alloy.

### Item 8:

The method of recovering electrode materials according to any one of items 1 through 7, wherein the etchant solution is at least one of aqueous lithium hydroxide solution and aqueous sodium hydroxide solution.

### Item 9:

The method of recovering electrode materials according to any one of items 1 through 7, wherein the etchant solution is an aqueous iron chloride solution.

### Item 10:

The method of recovering electrode materials according to item 6, wherein the preparing step includes removing the electrode assembly from an electricity storage device including a case accommodating the electrode assembly.

### Item 11:

The method of recovering electrode materials according to item 2, wherein:
the preparing step includes:
removing the electrode assembly from an electricity storage device including a case accommodating the electrode assembly; and
further separating the positive electrode sheet from the electrode assembly.

### Item 12:

The method of recovering electrode materials according to item 4, wherein:
the preparing step includes:
removing the electrode assembly from an electricity storage device including a battery case accommodating the electrode assembly; and
further separating the negative electrode sheet from the electrode assembly.

### Item 13:

The method of recovering electrode materials according to any one of items 10 through 12, wherein:
the battery case includes an opening;
   a sealing plate closing the opening and to which an electrode terminal is attached, a portion of the electrode terminal being connected to the electrode assembly in the battery case; and
   a bottom plate opposed to the sealing plate; and
the preparing step includes:
   disconnecting the sealing plate and the bottom plate from the battery case, to form a pair of openings; and
   pushing the electrode assembly out from one of the pair of openings toward the other one, to remove the electrode assembly from the battery case.

### Item 14:

The method of recovering electrode materials according to item 13, wherein, in the preparing step, the sealing plate and the bottom plate are disconnected from the battery case by water jet cutting.

### Item 15:

The method of recovering electrode materials according to items 1 through 14, further comprising, after the preparing step and before the dissolving step, a crushing step of crushing the electrode assembly or the electrode sheet.

### Item 16:

A method of manufacturing a recycled electricity storage device, including:
a preparing step of preparing an electrode assembly or an electrode sheet, the electrode assembly and the electrode sheet each including a current collector and an electrode active material layer formed on the current collector and containing an electrode active material;
a dissolving step of immersing the electrode assembly or the electrode sheet in an etchant solution that dissolves the current collector;
a separating step of separating a precipitate containing the electrode active material from the etchant solution in which the current collector is dissolved;
a recovering step of recovering an electrode material containing at least one of the positive electrode active material and the negative electrode active material from the precipitate; and
a constructing step of constructing an electricity storage device using the electrode material.

## Claims

1. A method of recovering electrode materials, comprising:
a preparing step (S1) of preparing an electrode assembly (20) or an electrode sheet (21,22), the electrode assembly (20) and the electrode sheet (21,22) each including a current collector (21a,22a) and an electrode active material layer (21b,22b) formed on the current collector and containing an electrode active material;
a dissolving step (S2) of immersing the electrode assembly (20) or the electrode sheet (21,22) in an etchant solution that dissolves the current collector (21a,22a); and
a separating step (S3) of separating a precipitate containing the electrode active material from the etchant solution in which the current collector (21a,22a) is dissolved.

2. The method of recovering electrode materials according to claim 1, wherein:
the preparing step (S1) includes preparing the electrode sheet (21);
the electrode sheet (21) is a positive electrode sheet (21) including a positive electrode current collector (21a) and a positive electrode active material layer (21b) formed on the positive electrode current collector (21b) and containing a positive electrode active material;
the dissolving step (S2) uses an etchant solution that dissolves the positive electrode current collector (21a); and
the separating step (S2) includes separating a precipitate containing the positive electrode active material from the etchant solution in which the positive electrode current collector (21a) is dissolved.

3. The method of recovering electrode materials according to claim 2, wherein the positive electrode current collector (21a) includes aluminum or an aluminum alloy.

4. The method of recovering electrode materials according to claim 1, wherein:
the preparing step (S 1) includes preparing the electrode sheet (22);
the electrode sheet (22) is a negative electrode sheet (22) including a negative electrode current collector (22a) and a negative electrode active material layer (22b) formed on the negative electrode current collector (22a) and containing a negative electrode active material;
the dissolving step (S2) uses an etchant solution that dissolves the negative electrode current collector (22a); and
the separating step (S3) includes separating a precipitate containing the negative electrode active material from the etchant solution in which the negative electrode current collector (22a) is dissolved.

5. The method of recovering electrode materials according to claim 4, wherein the negative electrode current collector (22a) includes copper or a copper alloy.

6. The method of recovering electrode materials according to claim 1, wherein:
the preparing step (S 1) includes preparing an electrode assembly (20);
the electrode assembly (20) includes:
a positive electrode current collector (21a);
a positive electrode active material layer (21b) formed on the positive electrode current collector (21a) and containing a positive electrode active material;
a negative electrode current collector (22a); and
a negative electrode active material layer (22b) formed on the negative electrode current collector (22a) and containing a negative electrode active material;
the dissolving step (S2) uses an etchant solution that dissolves the positive electrode current collector (21a) and negative electrode current collector (22a) of the electrode assembly (20); and
the separating step (S3) includes separating a precipitate containing the positive electrode active material and the negative electrode active material from the etchant solution in which the positive electrode current collector (21a) and the negative electrode current collector (22a) are dissolved.

7. The method of recovering electrode materials according to claim 6, wherein the positive electrode current collector (21a) includes aluminum or an aluminum alloy, and the negative electrode current collector (22a) includes copper or a copper alloy.

8. The method of recovering electrode materials according to any one of claims 1 through 7, wherein the etchant solution is at least one of aqueous lithium hydroxide solution and aqueous sodium hydroxide solution.

9. The method of recovering electrode materials according to claim 1, wherein the etchant solution is an aqueous iron chloride solution.

10. The method of recovering electrode materials according to claim 6, wherein the preparing step (S1) includes removing the electrode assembly (20) from an electricity storage device including a battery case (41) accommodating the electrode assembly (20).

11. The method of recovering electrode materials according to claim 2, wherein:
the preparing step (S1) includes:
removing the electrode assembly (20) from an electricity storage device including a battery case (41) accommodating the electrode assembly (20); and
further separating the positive electrode sheet (21) from the electrode assembly (20).

12. The method of recovering electrode materials according to claim 4, wherein:
the preparing step (S1) includes:
removing the electrode assembly (20) from an electricity storage device including a battery case (41) accommodating the electrode assembly (20); and
further separating the negative electrode sheet (22) from the electrode assembly (20).

13. The method of recovering electrode materials according to any one of claims 10 through 12, wherein:
the battery case (41) includes an opening;
a sealing plate (41b) closing the opening and to which an electrode terminal is attached, a portion of the electrode terminal being connected to the electrode assembly in the battery case (41); and
a bottom plate opposed to the sealing plate (41b); and
the preparing step includes:
disconnecting the sealing plate (41b) and the bottom plate from the battery case (41), to form a pair of openings; and
pushing the electrode assembly (20) out from one of the pair of openings toward the other one, to remove the electrode assembly (20) from the battery case (41).

14. The method of recovering electrode materials according to claim 13, wherein, in the preparing step (S1), the sealing plate (41b) and the bottom plate are disconnected from the battery case (41) by water jet cutting.

15. A method of manufacturing a recycled electricity storage device, comprising:
a preparing step (S 1) of preparing an electrode assembly (20) or an electrode sheet (21, 22), the electrode assembly (20) and the electrode sheet (21,22) each including a current collector (21a,22a) and an electrode active material layer (21b,22b) formed on the current collector (21a,22a) and containing an electrode active material;
a dissolving step (S2) of immersing the electrode assembly (20) or the electrode sheet (21,22) in an etchant solution that dissolves the current collector (21a,22a);
a separating step (S3) of separating a precipitate containing the electrode active material from the etchant solution in which the current collector (21a,22a) is dissolved;
a recovering step (S4) of recovering an electrode material containing at least one of the positive electrode active material and the negative electrode active material from the precipitate; and
a constructing step (S5) of constructing an electricity storage device using the electrode material.
